# EUROPÄISCHE PATENTSCHRIFT

(11) **EP 2 325 515 B1**
(45) Veröffentlichungstag und Bekanntmachung des Hinweises auf die Patenterteilung: **22.08.2012**
(21) Anmeldenummer: 10190470.4
(22) Anmeldetag: 09.11.2010
(51) Int. Cl.: F16D 55/2265, F16D 55/227

(54) **Scheibenbremse für ein Nutzfahrzeug**
Disc brake for a commercial vehicle
Frein à disque pour un véhicule utilitaire

(30) Priorität: 11.11.2009 DE 102009052790
(43) Veröffentlichungstag der Anmeldung: 25.05.2011
(73) Patentinhaber: KNORR-BREMSE Systeme für Nutzfahrzeuge GmbH, 80809 München (DE)
(72) Erfinder: Nesmjanowitsch, Igor, 94491 Hengersberg (DE)
(74) Vertreter: Mattusch, Gundula

(56) Entgegenhaltungen:
- EP-A1- 2 218 932
- WO-A1-2005/071280
- DE-A1-102006 053 183
- FR-A1- 2 772 098
- US-A1- 2004 188 191

## Beschreibung

Die Erfindung betrifft eine Scheibenbremse für ein Nutzfahrzeug nach dem Oberbegriff des Anspruchs 1.

Eine solche Scheibenbremse ist aus der DE 10 2006 053 183 A 1 bekannt.

Zum Schutz der Führungsholme, auf denen der Bremssattel einer Schiebesattel-Scheibenbremse verschiebbar gelagert ist, sind Faltenbälge vorgesehen, die jeweils endseitig am Führungsholm und an dem relativ dazu bewegbaren Bauteil, beispielsweise dem genannten Bremssattel, befestigt sind. Hierdurch wird verhindert, dass Schmutz und/oder Feuchtigkeit in den Gleitbereich eindringt und damit die Gleiteigenschaften durch Korrosionsschäden oder dergleichen herabgesetzt bzw. zerstört werden.

Zur Kapselung des Raumes, in dem der Führungsholm gelagert ist, ist auf der dem Faltenbalg gegenüberliegenden Seite die Aufnahme, in der die Gleitbuchse gehalten ist, durch eine Kappe verschlossen, so dass auch in diesem Bereich gegenüber der Umgebung ein Eindringen von Schmutz und Feuchtigkeit aus der Umgebung verhindert wird.

Die in dem gekapselten Raum eingeschlossene Luft strömt idealerweise im Bereich zwischen dem Führungsholm und der Gleitbuchse zu den durch die Kappe einerseits und den Faltenbalg andererseits begrenzten Räumen. Allerdings wird die Strömung nachteilig beeinflusst, beispielsweise durch den Abriebzustand der gebildeten Führungslagerung, der Menge eines darin eingebrachten Schmiermittels oder dergleichen.

Bei einem geringen Spiel zwischen der Gleitbuchse und dem Führungsholm und hohem Schmiermittelanteil kommt es bei Verschiebungen des Bremssattels zu einem Stau der von der Kappenseite verdrängten Luft im Faltenbalg, wodurch dieser aufgebläht wird.

In der Folge kann dies zu dessen Beschädigung führen, die einen Austausch zwingend erforderlich macht, da ansonsten die Schutzfunktion des Faltenbalges nicht gewährleistet ist.

Darüber hinaus ergeben sich auch rein funktional Probleme, da ein aufgeblähter Faltenbalg wie eine Luftfeder wirkt, die den Bremsbelag an die Bremsscheibe der Scheibenbremse drückt, so dass während des Fahrbetriebs der Bremsbelag ständig an der Bremsscheibe anliegt, was zum Heißlaufen der Bremse führen kann, mit den sich daraus ergebenden, insbesondere sicherheitsrelevanten Problemen.

In der US 2004/0188191 A 1 ist eine Scheibenbremse geoffenbart, bei der die Führungsholme jeweils in einer am Bremssattel verschiebegesichert gehaltenen Gleitbuchse geführt sind, wobei diese Gleitbuchse im Anlagebereich mit dem Führungsholm axial sich erstreckende Nuten aufweist als Depot für ein Schmiermittel.

Der Erfindung liegt die Aufgabe zugrunde, eine Scheibenbremse der gattungsgemäßen Art so weiterzuentwickeln, dass die Funktions- bzw. Betriebssicherheit der Scheibenbremse insgesamt verbessert wird.

Diese Aufgabe wird durch eine Scheibenbremse mit den Merkmalen des Anspruchs 1 gelöst.

Durch die erfindungsgemäß vorgesehenen Ausnehmungen, beispielsweise als Axialrillen am Außenmantel der Gleitbuchse und/oder an der zugeordneten Wandung der Aufnahme, in der die Gleitbuchse verschiebegesichert positioniert ist, wird die Luftströmung bei der Verschiebebewegung des Bremssattels unterstützt, so dass die in der Lagerung eingeschlossene Luft deutlich besser zirkulieren kann, wodurch ein Aufblähen des Faltenbalges bzw. ein Ansaugen zumindest minimiert wird.

Die außenseitig angebrachten Rillen der Gleitbuchse können durch Prägen eingebracht werden, wobei sie sich über die gesamte Länge der Gleitbuchse erstrecken, so dass eine Verbindung zwischen dem durch den Deckel einerseits und durch den Faltenbalg andererseits gekapselten Raum hergestellt wird.

Bei der Ausführungsvariante, in der die Ausnehmungen in der die Gleitbuchse aufnehmenden Aufnahme des Bremssattels vorgesehen sind, werden diese Ausnehmungen, ebenfalls bevorzugt rillenförmig und sich in axialer Richtung erstreckend, beim Gießen durch Kernveränderung mit eingegossen, wenn der Bremssattel, wie üblich, als Gussteil ausgebildet ist.

Prinzipiell ist die Anzahl der Ausnehmungen, deren Form und Größe variabel und von den jeweiligen Erfordernissen abhängig.

Das beschriebene Belagschleifen wird nun ebenso wirkungsvoll verhindert, wie das vorgenannte Aufblähen der Faltenbälge, wodurch die Gefahr einer Beschädigung der Faltenbälge praktisch ausgeschlossen ist und die Funktionssicherheit der Scheibenbremse insgesamt verbessert wird.

Da im Übrigen der Faltenbalg im Betrieb lediglich gestaucht, nicht jedoch gestreckt und durch die Erfindung lediglich die Entstehung eines erhöhten Innendrucks vermieden wird, sind Vorkehrungen, die einen Druckausgleich bei einer Streckung des Faltenbalgs erforderlich machen würden, nicht vorzusehen, so dass die Realisierung der Erfindung mit äußerst einfachen Mitteln möglich ist.

Dies geht selbstverständlich einher mit einem sehr gering zu haltenden und daher äußerst kostengünstigen Fertigungs- und Montageaufwand, so dass die Erfindung im Grunde kostenneutral zu realisieren ist.

Weitere vorteilhafte Ausbildungen der Erfindung sind in den Unteransprüchen gekennzeichnet.

Ein Ausführungsbeispiel der Erfindung wird nachfolgend anhand der beigefügten Zeichnungen beschrieben.

Es zeigen:
- Figur 1: ein Ausführungsbeispiel der Erfindung in einem Teilausschnitt einer Scheibenbremse in einem perspektivisch dargestellten Längsschnitt
- Figur 2: ein weiteres Ausführungsbeispiel als Einzelheit der Scheibenbremse, ebenfalls schaubildlich dargestellt.

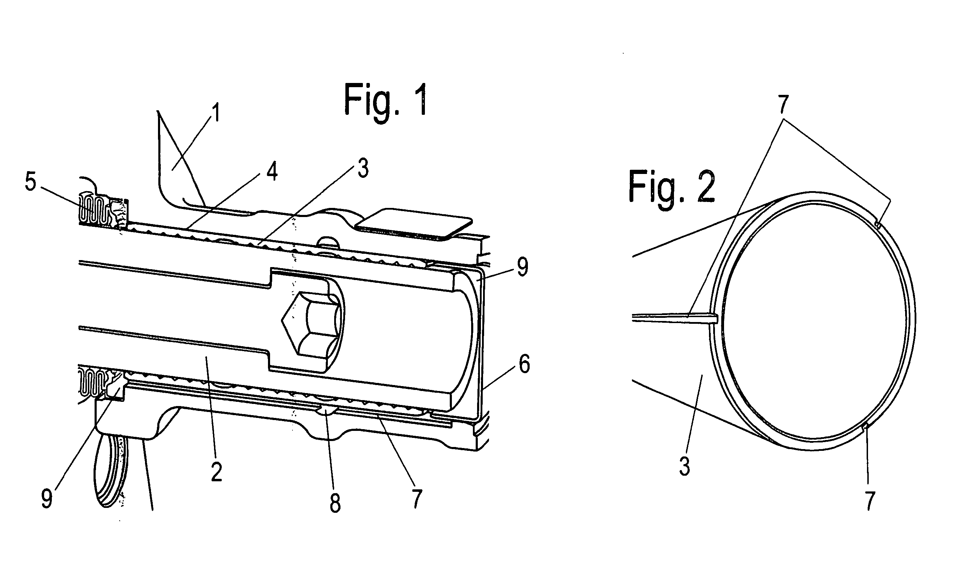

In der Figur 1 ist eines von üblicherweise zwei Befestigungselementen gezeigt, mit denen ein Bremssattel 1 einer Scheibenbremse für ein Nutzfahrzeug an einem nicht dargestellten ortsfesten Bremsträger axial verschiebbar gehalten ist.

Das Befestigungselement weist einen fest mit dem Bremsträger verbundenen Führungsholm 2 auf, auf dem eine verschiebegesichert in einer Aufnahme 4 des Bremssattels 1 gehaltene Gleitbuchse 3 geführt ist.

An dem einer nicht gezeigten Bremsscheibe zugewandten Ende ist an dem Führungsholm 2 ein Faltenbalg 5 befestigt, der andererseits am Bremssattel 1 angeschlossen ist, unter Bildung eines gekapselten Raumes 9.

Dem Faltenbalg 5 gegenüberliegend ist die Aufnahme 4 durch eine Kappe 6 verschlossen, die den gekapselten Raum 9 andererseits begrenzt.

Erfindungsgemäß sind im Anlagebereich Gleitbuchse 3/Aufnahme 4 Ausnehmungen 7 vorgesehen, die als Längsrillen ausgebildet sind und bei dem in der Figur 1 gezeigten Ausführungsbeispiel in die Wandung der Aufnahme 4 eingeformt sind. Eine umlaufende Ringnut 8, in die die Ausnehmungen 7 münden, dient als weitere sozusagen Ausgleichskammer.

Bei dem in der Figur 2 gezeigten Beispiel sind die rillenförmigen Ausnehmungen 7 in die äußere Mantelfläche der Gleitbuchse 3 eingelassen, beispielsweise durch Prägen, und in gleichem Winkelabstand zueinander angeordnet.

In jedem Fall verbinden die Ausnehmungen 7 die beiden gekapselten Räume 9 miteinander, so dass auch bei einer reduzierten Luftströmung im Anlagebereich des Führungsholms 2 zur Gleitbuchse 3 eine ausreichende Luftströmung bei einer Verschiebebewegung des Bremssattels 1 relativ zum Führungsholm 2 gewährleistet ist.

## Patentansprüche

1. Scheibenbremse für ein Nutzfahrzeug, mit einem eine Bremsscheibe umfassenden Bremssattel (1), der an einem ortsfesten Bremsträger durch zwei Befestigungselemente, bezogen auf die Bremsscheibe, axial verschiebbar ist, wobei jedes Befestigungselement einen mit dem Bremsträger fest verbundenen Fühnmgsholm (2) aufweist, der zur Umgebung gekapselt in einer in einer Aufnahme (4) des Bremssattels (1) verschiebegesichert gehaltenen Gleitbuchse (3) geführt ist, **dadurch gekennzeichnet, dass** im Anlagebereich Gleitbuchse (3)/Aufnahme (4) mit dem gekapselten Raum (9) in Verbindung stehende Ausnehmungen (7) vorgesehen sind.

2. Scheibenbremse nach Anspruch 1, **dadurch gekennzeichnet, dass** die Ausnehmungen (7) als Rillen ausgebildet sind.

3. Scheibenbremse nach Anspruch 1 oder 2, **dadurch gekennzeichnet, dass** sich die Ausnehmungen (7) in Verschieberichtung erstrecken.

4. Scheibenbremse nach einem der vorhergehenden Ansprüche, **dadurch gekennzeichnet, dass** die rillenförmigen Ausnehmungen (7) in gleichem Winkelabstand zueinander angeordnet sind.

5. Scheibenbremse nach einem der vorhergehenden Ansprüche, **dadurch gekennzeichnet, dass** die Ausnehmungen (7) in der äußeren Mantelfläche der Gleitbuchse (3) angeordnet sind.

6. Scheibenbremse nach einem der vorhergehenden Ansprüche, **dadurch gekennzeichnet, dass** die Ausnehmungen (7) in der Gleitbuchse (3) durch Prägen eingebracht sind.

7. Scheibenbremse nach einem der vorhergehenden Ansprüche, **dadurch gekennzeichnet, dass** die Ausnehmungen (7) in der Wandung der Aufnahme (4) angeordnet sind.

8. Scheibenbremse nach einem der vorhergehenden Ansprüche, **dadurch gekennzeichnet, dass** die in der Wandung der Aufnahme (4) vorgesehenen Ausnehmungen (7) in den als Gussteil ausgebildeten Bremssattel (1) mit eingegossen sind.

9. Scheibenbremse nach einem der vorhergehenden Ansprüche, **dadurch gekennzeichnet, dass** die Ausnehmungen (7) in der Aufnahme (4) in zumindest eine umlaufende Ringnut (8) münden.

## Claims

1. Disc brake for a commercial vehicle, with a brake caliper (1) comprising a brake disc, which can be displaced axially relative to the brake disc on a positionally fixed brake carrier by two fixing elements, such that each fixing element comprises a guide strut (2) attached firmly to the brake carrier, which, to encapsulate it relative to the surroundings, is inserted into a sliding sleeve (3) held fixedly in a receptacle (4) of the brake caliper (1), **characterised in that** in the contact area between the sliding sleeve (3) and the receptacle recesses (7) that communicate with the encapsulated space (9) are provided.

2. Disc brake according to Claim 1, **characterised in that** the recesses (7) are in the form of grooves.

3. Disc brake according to Claims 1 or 2, **characterised in that** the recesses (7) extend in the displacement direction.

4. Disc brake according to any of the preceding claims, **characterised in that** the groove-shaped recesses (7) are arranged with equal angular spacing.

5. Disc brake according to any of the preceding claims, **characterised in that** the recesses (7) are formed in the outer shell surface of the sliding sleeve (3).

6. Disc brake according to any of the preceding claims, **characterised in that** the recesses (7) are formed in the sliding sleeve (3) by pressing.

7. Disc brake according to any of the preceding claims, **characterised in that** the recesses (7) are formed in the wall of the receptacle (4).

8. Disc brake according to any of the preceding claims, **characterised in that** the recesses (7) provided in the wall of the receptacle (4) are cast in place in the brake caliper (1), which is formed as a casting.

9. Disc brake according to any of the preceding claims, **characterised in that** the recesses (7) in the receptacle (4) open into at least one all-round annular groove (8).

## Revendications

1. Frein à disque pour un véhicule utilitaire, comprenant un étrier (1) chevauchant un disque de frein, qui est déplaçable à un flasque de frein stationnaire moyennant deux éléments de fixation en sens axial relativement audit disque de frein, dans lequel chaque élément de fixation présente un longeron de guidage (2) relié de façon solidaire audit flasque de frein, qui est guidé dans une douille de glissement (3) retenue de façon empêchant un déplacement dans un élément récepteur (4) dudit étrier (1), en forme encapsulée relativement à l'ambiance, **caractérisé en ce que** dans la zone d'appui entre ladite douille de glissement (3) et ledit élément récepteur (4) des creux (7) sont formés, qui se trouvent en communication avec ledit espace encapsulé (9).

2. Frein à disque selon la revendication 1, **caractérisé en ce que** lesdits creux (7) sont configurés sous forme des cannelures.

3. Frein à disque selon les revendications 1 ou 2, **caractérisé en ce que** lesdits creux (7) s'étendent le long la direction de déplacement.

4. Frein à disque selon une quelconque des revendications précédentes, **caractérisé en ce que** lesdits creux en cannelure (7) sont disposés à des écarts angulaires égaux l'un de l'autre.

5. Frein à disque selon une quelconque des revendications précédentes, **caractérisé en ce que** lesdits creux (7) sont formés dans la surface de l'enveloppe extérieure de ladite douille de glissement (3).

6. Frein à disque selon une quelconque des revendications précédentes, **caractérisé en ce que** lesdits creux (7) sont formés dans ladite douille de glissement (3) par estampage.

7. Frein à disque selon une quelconque des revendications précédentes, **caractérisé en ce que** lesdits creux (7) sont disposés dans la paroi dudit élément récepteur (4).

8. Frein à disque selon une quelconque des revendications précédentes, **caractérisé en ce que** les creux (7) formés dans la paroi dudit élément récepteur (4) sont coulés dans ledit étrier (1) configuré en tant que pièce de fonte ensemble avec le dernier.

9. Frein à disque selon une quelconque des revendications précédentes, **caractérisé en ce que** lesdits creux (7) dans ledit élément récepteur (4) s'ouvrent dans au moins une rainure annulaire périphérique (8).
